# FASCICULE DE BREVET EUROPEEN

(11) **EP 1 285 440 B1**
(45) Date de publication et mention de la délivrance du brevet: **05.11.2008**
(21) Numéro de dépôt: 01940624.8
(22) Date de dépôt: 29.05.2001
(51) Int. Cl.: G11B 7/24

(54) **SUPPORTS D'ENREGISTREMENT OPTIQUE IRREVERSIBLE**
IRREVERSIBLER OPTISCHER AUFZEICHNUNGSTRÄGER
IRREVERSIBLE OPTICAL RECORDING MEDIUM

(30) Priorité: 30.05.2000 FR 0006911
(43) Date de publication de la demande: 26.02.2003
(73) Titulaire: COMMISSARIAT A L'ENERGIE ATOMIQUE, 75015 Paris (FR); MPO International, 53700 Averton (FR)
(72) Inventeur: POUPINET, Ludovic, F-38170 Seyssinet (FR); BECHEVET, Bernard, 38640 Claix (FR); ARMAND, Marie-Françoise, F-38410 Vaulnaveys-le-Haut (FR); PERRIER, Robin, F-73200 Albertville (FR); FALLOU, Olivier, F- 92120 MONTROUGE (FR)
(74) Mandataire: Ilgart, Jean-Christophe
(86) Numéro de dépôt international: PCT/FR2001/001660
(87) Numéro de publication internationale: WO 2001/093256

(56) Documents cités:
- EP-A- 0 822 543
- GB-A- 2 052 080
- US-A- 5 479 382
- US-A- 5 709 978
- US-A- 5 753 413

## Description

### Domaine technique

La présente invention a pour objet des supports d'enregistrement optique irréversible, respectivement pour l'écriture et pour la lecture d'informations. L'enregistrement est irréversible en ce sens que l'écriture n'a lieu qu'une fois, sans possibilité d'effacement ni de réécriture. La lecture en revanche, peut être répétée.

L'invention trouve une application, par exemple, dans l'enregistrement sur disque optique de type CD-R ("Compact Disc Recordable"), WORM ("Write-Once Read Many"), DRAW ("Direct Read After Write") ou encore DVD-R ("Digital Versatile Disc Recordable").

Mais l'invention ne se limite pas au cas des disques. Elle couvre tout support, de quelque forme que ce soit (bande, carte, etc.).

### Etat de la technique antérieure

Dans le domaine de l'enregistrement optique irréversible, le CD-R, compatible avec le CD ("Compact Disc"), s'est rapidement imposé comme un standard mondial. L'évolution de la production mondiale atteste très clairement de ce phénomène : 862 millions de disques en 1998, 2078 millions en 1999. Le prix actuel d'un CD-R est inférieur à 1$ et une baisse de 30% est attendue dans les deux ans à venir. Le CD-R n'est donc plus seulement utilisé pour l'enregistrement personnel mais également pour la réalisation de petites séries de disques, en lieu et place du pressage de CD ou de CD-ROM. La durée de vie économique du produit est difficile à estimer. Les plus optimistes pensent que le CD-R pourrait ne pas souffrir de la concurrence du CD-RW ("Compact Disc Readable Writable") et de la famille DVD. En particulier, dans le domaine informatique, le CD-R pourrait remplacer définitivement la disquette, avec une capacité 400 fois supérieure.

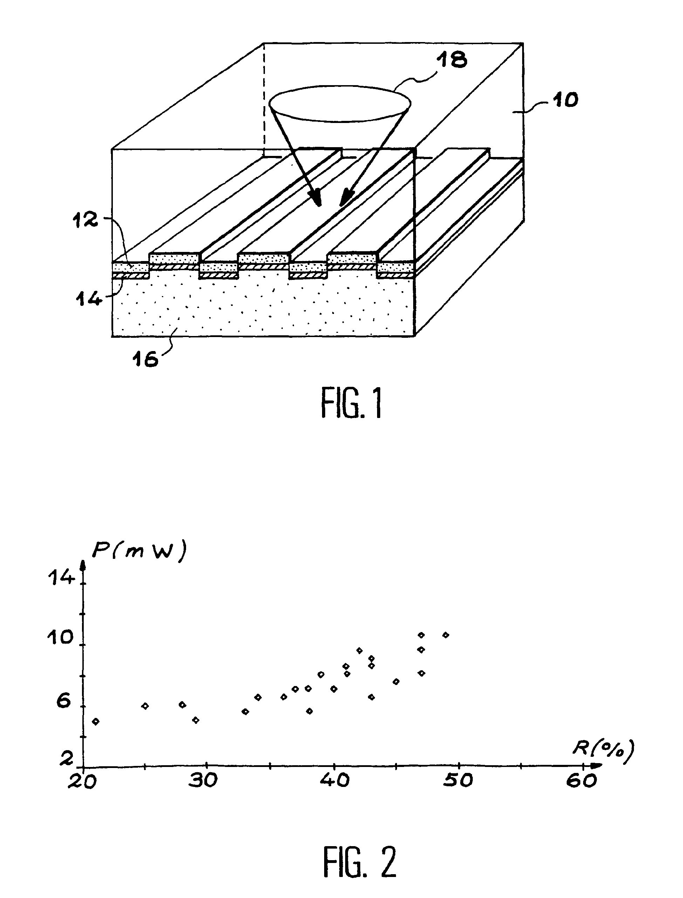

Actuellement, la grande majorité des disques utilise une technique à base de colorant organique. La structure du disque est illustrée sur la figure 1 annexée.

Le support d'enregistrement représenté comprend :
- un substrat transparent 10 (en polycarbonate par exemple),
- une couche 12 de colorant sensible aux longueurs d'onde comprise entre 7750 et 7950Å,
- une couche réfléchissante 14, en alliage d'or ou d'argent par exemple,
- une ou deux couches de protection 16.

Les données sont écrites sur le disque en focalisant un faisceau optique 18 émis par un laser de forte puissance. Le faisceau atteint la couche 12 de colorant à travers le substrat 10. La lumière absorbée par le colorant chauffe celui-ci et entraîne une modification irréversible de la structure optique. Cette modification peut se limiter au colorant, mais elle peut également atteindre les matériaux environnants : substrat 10 ou couche réfléchissante 14.

Les données sont enregistrées sous forme d'alternance de zones non-écrites de forte réflexion et de zones écrites de faible réflexion. Le codage des données est obtenu par la variation de longueur des marques inscrites.

La lecture des données est obtenue avec un faisceau lumineux de lecture issu d'une diode laser de faible puissance.

Les données sont inscrites en spirale sur la surface du disque. Le suivi de cette spirale est rendu possible, à la lecture comme à l'écriture, par la présence d'un sillon pré-gravé dans le substrat. Les données ne sont inscrites que dans le sillon ("groove"). La zone vierge de la spirale est appelée "land".

Cette technologie présente un certain nombre de problèmes liés au vieillissement des produits organiques (par la lumière ou la température par exemple), à la grande sensibilité du colorant à la longueur d'onde (problème de compatibilité entre formats de type CD et DVD par exemple), au coût de l'étape de dépôt du colorant (durée, entretien, coût de la matière première).

Le dernier problème, notamment, renforce l'intérêt d'une autre solution qui permettrait d'abaisser les coûts de production. En particulier, dans les pays où le coût de la main d'oeuvre est élevé, suivre la tendance du marché sera difficile. Ainsi, en 1998, 37% de la production mondiale se faisait à Taïwan contre 60% en 1999. Une solution intéressante consisterait à remplacer le produit organique par un produit inorganique. Mais d'autres difficultés apparaissent alors :
- le passage d'une réflexion forte, pour le disque vierge, à une réflexion faible pour les points inscrits doit être conservé pour permettre la compatibilité avec le matériel existant (graveurs et lecteurs),
- une sensibilité suffisante doit être préservée pour que la puissance d'écriture soit dans la gamme accessible aux graveurs actuels à vitesse de gravure donnée,
- une qualité d'écriture suffisante (fort rapport signal à bruit, faible jigue ou "jitter", faible asymétrie) doit être obtenue pour garantir une écriture et une lecture satisfaisante,
- la durée de vie doit être suffisante en dépit du vieillissement dû à la température, au soleil, aux chocs et aux rayures.

La résolution simultanée de ces problèmes est difficile. De plus, les réalités industrielles imposent l'usage de technologies de dépôt éprouvées et rapides. Il s'agit, le plus souvent, de pulvérisation, et non d'évaporation, par exemple, souvent trop lente. De même, la réduction des coûts pousse à minimiser le nombre de postes de pulvérisation et donc le nombre de matériaux et de couches, voire même l'épaisseur de ces dernières.

L'utilisation de matériaux inorganiques pour l'enregistrement irréversible est envisagée depuis longtemps. Le tellure et ses alliages ont fait l'objet d'études avant même l'apparition des colorants. Depuis que ces derniers se sont imposés, de nouveaux matériaux font régulièrement leur apparition dans ce domaine. Parmis ces solutions, peu sont compatible avec le matériel existant de gravure et de lecture. Des solutions très variées ont pourtant été étudiées [1] :
**Formation de trous** [2] : Il s'agit de la méthode qui a été le plus étudiée dans les années 80. Elle consiste à créer un trou dans la couche active à l'aide d'une impulsion lumineuse intense. Les matériaux les plus utilisés dans cette technique sont In, Bi, Te et divers chalcogénures (en excluant l'utilisation de matériaux organiques). Tous ces matériaux ont en commun un bas point de fusion et une grande absorption.
**Formation de bulles** [3] : Classiquement, la couche active comporte une couche métallique (alliage d'or ou de platine) et une couche de polymère organique. L'élévation de température dans la couche métallique est transférée à la couche de polymère ce qui se traduit par une décomposition de ce dernier et une émission de gaz. Ce gaz détache la couche métallique du substrat. L'éclatement de la bulle peut être évité en optimisant les paramètres de la couche active. Les travaux concernant AgOₓ sont également à ranger dans cette catégorie.
**Ségrégation** : [4] Le constituant de la couche se décompose sous irradiation laser. Les sous-oxydes sont de bons candidats, par exemple TeO_{1,1}. Ce matériau se décompose en TeO₂ et Te après irradiation. Te étant réfléchissant, le point inscrit est plus réfléchissant que son entourage.
**Changement de phase cristallin-amorphe** : Certains matériaux étudiés dans le cadre de l'ablation sont proches des matériaux à changement de phase. On peut donc imaginer que des matériaux employés habituellement pour l'enregistrement par changement de phase sont utilisables de manière irréversible dans le cadre de l'ablation. Cependant, pour que l'écriture de données par changement de phase se traduise par une modification de la réflexion d'une valeur haute à une valeur basse, le matériau doit passer de l'état cristallin à l'état amorphe. Or, le matériau est dans un état amorphe après son dépôt sur le substrat. L'écriture par changement de phase nécessite donc une étape d'initialisation qui consiste à cristalliser le matériau sur toute la surface du disque. Cette étape représente un coût non négligeable dans la fabrication d'un disque de ce type. Enfin, le contrôle des effets thermiques dans le disque nécessite souvent la présence de trois à quatre couches, dont certaines, diélectriques, peuvent être relativement épaisses. L'utilisation d'une écriture irréversible basée sur le changement de phase ne paraît donc pas intéressante du point de vue économique.
**Changement de texture** [5] : Cette technique concerne en général des couches actives à base de germanium ou de silicium. La surface rugueuse de la couche devient lisse après irradiation laser. La réflexion passe donc d'une valeur basse à une valeur élevée. Ce n'est pas le sens du changement recherché. D'autre part, ces disques comportent souvent un niveau de bruit élevé.

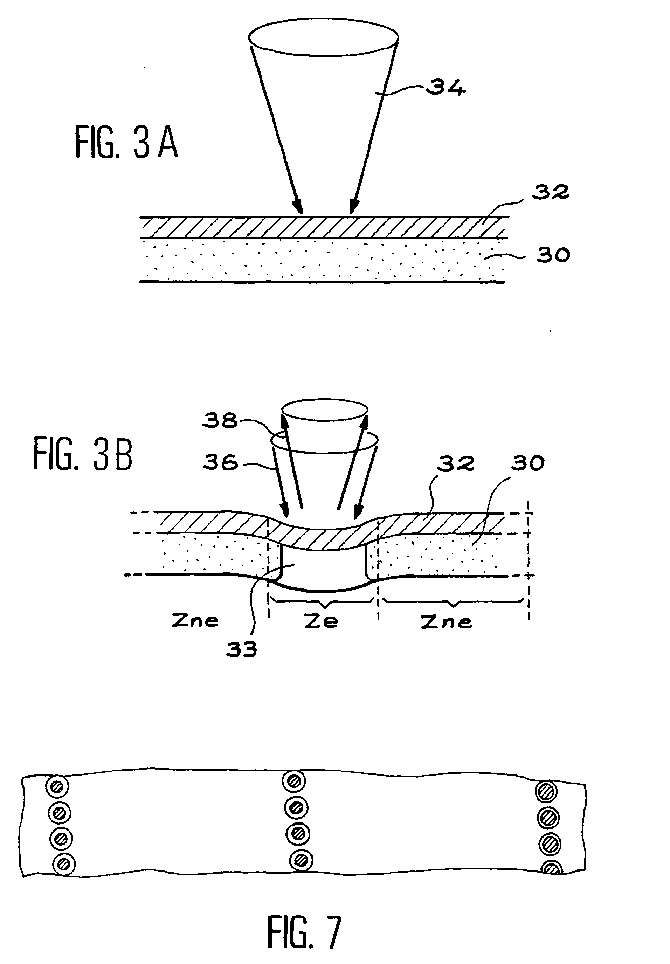

A la connaissance des Demandeurs, un disque ayant plus de 60% de réflexion avec une seule couche de matériau inorganique ne peut être obtenu qu'avec des couches épaisses et/ou des matériaux proches des métaux nobles. Or, l'écriture dans ces matériaux ne peut se faire qu'à des puissances élevées incompatibles avec les normes, en particulier du fait d'une absorption plus faible, d'une conductivité thermique plus importante et d'une température de fusion plus élevée. Par exemple, on ne peut pas écrire un signal dit "3T-3T" (où la notation 3T désigne la longueur des marques inscrites sur le disque et la longueur des intervalles entre ces marques), avec un bon rapport signal sur bruit (ce rapport reste inférieur à 20dB quelle que soit la puissance) dans une couche d'or de 20 nm ayant une réflexion de 60%. Le même essai avec une couche de 10 nm, présentant une réflexion de 40% environ, aboutit à un résultat identique. Pour augmenter la sensibilité, on utilise en général des matériaux plus sensibles que les métaux nobles, comme le tellure par exemple. Malheureusement, une seule couche de matériau sensible ne permet généralement pas d'obtenir une réflexion initiale suffisante. C'est le cas également avec un matériau comme le tellure utilisé par les Demandeurs comme on peut le voir sur la Figure 3. Cette figure donne, en abscisses, la réflexion R en % dans une zone d'écriture et , en ordonnées, la puissance d'écriture minimale P (en mw). La réflexion obtenue ne dépasse jamais 50%, quelles que soient les épaisseurs et les conditions de dépôt, pour le matériau étudié.

Pour augmenter la réflexion, une méthode classique consiste à ajouter une couche d'or ou d'argent derrière la couche sensible [6] (par rapport à l'incidence de la lumière, de façon similaire au cas des disques à base de matériau organique). Cette couche réfléchissante est en général séparée de la couche sensible par une couche diélectrique. Pour certains mécanismes d'écriture, comme la formation de trous par exemple, la présence de cette couche diélectrique se traduit souvent par une perte de sensibilité et une baisse du rapport signal sur bruit. Il faut alors diminuer l'épaisseur de la couche sensible afin de diminuer la puissance de seuil. Malheureusement, les couches très fines ont en général un mauvais rapport signal sur bruit et une réflexion plus faible.

La présente invention a justement pour but de remédier à tous ces inconvénients.

### Exposé de l'invention

A cette fin, l'invention préconise l'utilisation d'une structure très simple, sans matériau organique, et dont le fonctionnement est compatible avec les techniques et matériels connus. Cette structure comprend essentiellement un empilement bicouche constitué par une couche semi-réfléchissante et d'une couche inorganique. L'écriture s'effectue à travers la couche semi-réfléchissante. La lecture se fait par la même face. Sous l'effet de l'irradiation, la couche inorganique subit des déformations de nature diverse : creux, criques, bulles, cavités, cratères, bossages, dislocations, gonflements, bourrelets, ablation partielle ou totale, reflux de matière etc. Des déformations peuvent éventuellement se produire dans la couche semi-réfléchissante et dans le substrat. Les puissances nécessaires à l'apparition des déformations sont compatibles avec celles qui sont mises en oeuvre dans les appareils de gravure actuels. Elles ont en tout cas pour effet d'abaisser le coefficient de réflexion de l'empilement bicouche, qui, en dehors des zones ainsi déformées peut atteindre 65%. La couche inorganique étant à l'origine de ces déformations est appelée par la suite "couche active". Elle présente, en elle même, lorsqu'elle n'est pas déformée, un certain coefficient de réflexion mais qui est insuffisant. La couche semi-réfléchissante coopère avec la couche inorganique pour accroître la valeur de cette réflexion.

De façon plus précise, la présente invention a pour objet un support d'enregistrement pour l'écriture d'informations, **caractérisé en ce qu'**il comprend un empilement bicouche constitué par une couche semi-réfléchissante et une couche active inorganique, la couche active inorganique étant apte à subir des déformations sous l'effet d'un rayonnement optique d'écriture dirigé à travers la couche semi-réfléchissante, ces déformations abaissant le coefficient de réflexion de l'empilement.

L'invention a également pour objet un support d'enregistrement pour la lecture d'informations, caractérisé en ce qu'il comprend un empilement bicouche constitué par une couche semi-réfléchissante et une couche active inorganique, la couche active inorganique présentant des déformations dans certaines zones, le coefficient de réflexion de l'empilement étant plus faible dans ces zones qu'en dehors.

De préférence, l'empilement bicouche est déposé sur un substrat. La couche semi- réfléchissante peut être disposée entre le substrat et la couche active inorganique. A l'inverse la couche active organique peut être disposée entre le substrat et la couche semi-réfléchissante. Dans le premier cas, le substrat doit être transparent. Ce substrat peut être gravé sous forme d'un sillon spiralé.

De préférence encore, la couche semi-réfléchissante est un métal. Ce métal peut être pris dans le groupe comprenant l'aluminium, l'argent, le cuivre, l'or, le zinc, le titane et leurs alliages. L'aluminium semble être un métal particulièrement approprié.

La couche semi-réfléchissante peut être réalisée en deux matériaux différents (ou plus). Elle peut comprendre par exemple une fine couche d'or et une fine couche d'argent.

De préférence, la couche active est en un matériau pris dans le groupe comprenant le tellure, l'antimoine, le sélénium, l'indium, le bismuth, l'arsenic et leurs alliages.

La couche active peut être en alliage SbTe ou SbSe avec un métal pris dans le groupe comprenant Al, Ag, Cu, Si, As.

Le matériau de la couche active peut en outre comporter une certaine proportion d'azote.

Dans un mode de réalisation avantageux, une couche de protection est déposée sur l'empilement, côté couche active inorganique. Cette couche de protection peut être en silicone élastomère. Une couche intermédiaire diélectrique, organique ou inorganique, peut éventuellement être intercalée entre la couche active et la couche de protection. Cette couche intermédiaire favorise l'écriture et/ou la longévité du support par ses propriétés thermiques, chimiques et/ou mécaniques.

La présente invention a également pour objet un procédé d'écriture d'un support d'enregistrement tel qu'il vient d'être défini et qui est **caractérisé en ce qu'**on dirige un faisceau optique sur la couche active à travers la couche semi-réfléchissante, la puissance du faisceau optique étant apte à provoquer des déformations de la couche active.

La présente invention a encore pour objet un procédé de lecture d'un support d'enregistrement tel qu'il a été défini, caractérisé en ce qu'on dirige un faisceau optique sur la couche active à travers la couche semi-réfléchissante, la puissance du faisceau optique étant apte à donner naissance à un faisceau réfléchi dont l'intensité dépend des déformations de la couche active.

### Brève description des dessins

- la figure 1, déjà décrite, montre le schéma de principe d'un disque à colorant organique ;
- la figure 2 montre le lien entre le coefficient de réflexion d'une couche inorganique unique en Sb₂Te₃ et la puissance lumineuse requise pour l'écriture ;
- les figures 3A et 3B illustrent schématiquement l'empilement bicouche conforme à l'invention avant et après écriture ;
- la figure 4 illustre un mode particulier de réalisation d'un support selon l'invention dans le cas d'un disque comprenant des sillons gravés dans un substrat avec couche de protection ;
- la figure 5 rassemble des courbes montrant l'évolution du rapport signal sur bruit en fonction de la puissance d'écriture pour plusieurs épaisseurs de la couche semi-réfléchissante ;
- les figures 6A et 6B montrent l'image d'un support après illumination avec un laser respectivement de faible et de forte puissance ;
- la figure 7 représente une image de points inscrits sur un disque vernis.

### Description de modes particuliers de réalisation

La figure 3A montre un empilement bicouche conforme à l'invention. Cet empilement est constitué par une couche inorganique 30, dite par la suite "couche active", et une couche semi-réfléchissante 32, par exemple métallique. Cet empilement peut être écrit par un faisceaux lumineux 34 dirigé sur et à travers la couche réfléchissante 32. L'énergie déposée par le faisceau lumineux, après traversée de la couche semi-réfléchissante, déforme la couche active, comme il a été expliqué plus haut. La couche semi-réfléchissante 32 peut n'être pas déformée ou être déformée elle aussi.

La figure 3B montre l'empilement après écriture et pendant l'opération de lecture. Le faisceau de lecture 36, d'intensité plus faible que le faisceau d'écriture 34, est dirigé vers la couche semi-réfléchissante 32. Du fait de la déformation de la couche active 30 (qui dans le cas illustré, est liée à l'apparition d'un trou 33) et éventuellement de la couche semi-réfléchissante 32, le coefficient de réflexion de l'empilement est plus faible dans les zones écrites Ze que dans les zones non écrites Zne. Le faisceau réfléchi 38 est donc moins intense dans les zones écrites Ze que dans les zones non décrites Zne ce qui permet, par des moyens optiques bien connus de l'homme du métier, de discriminer les différentes zones et de lire ainsi l'information enregistrée.

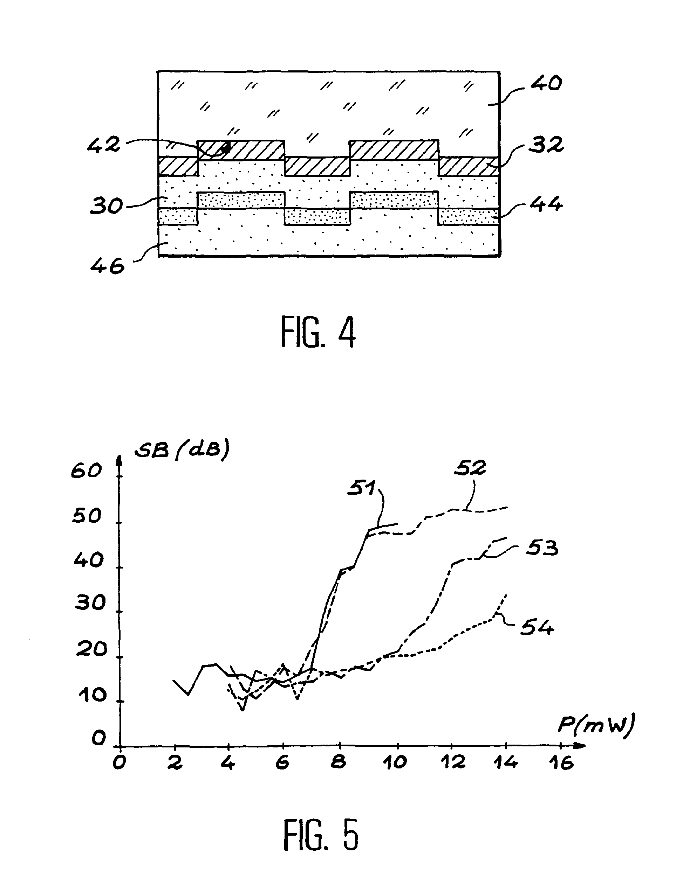

L'empilement bicouche qui vient d'être décrit peut être déposé sur n'importe quel substrat et notamment sur un substrat en forme de disque avec un sillon gravé. C'est ce qui est représenté sur la figure 4 avec un certain nombre d'options. Sur cette figure on voit un substrat transparent 40 gravé par des sillons 42 et un empilement bicouche 30-32 conforme à l'invention.

En plus, dans le mode de réalisation illustré, le support comprend une couche diélectrique 44 et une couche de protection 46.

Le substrat 40 peut être en plastique (polycarbonate ou PMMA par exemple) avec des sillons de largeur comprise entre 400 et 800 nm et de profondeur comprise entre 20 et 60 nm.

Sur la figure 4, la couche semi-réfléchissante 32 est déposée sur le substrat, ce qui suppose que celui-ci est transparent puisque l'écriture et la lecture s'effectuent à travers cette couche. Mais on peut aussi renverser la disposition et mettre la couche active sur le substrat, auquel cas c'est la couche de protection 46 qui doit être transparente. Dans ce cas, le substrat peut être opaque.

Le matériau de la couche semi-réfléchissante est choisi pour ses propriétés de réflexion (Al, Zn, Au, Ag, Cu ou leurs alliages par exemple). Il est souhaitable que cette couche absorbe peu la lumière. La couche semi-réfléchissante étant vue en premier par le faisceau lumineux, son épaisseur doit être ajustée au mieux pour augmenter la réflexion sans augmenter excessivement le seuil d'écriture. Cette épaisseur peut être comprise entre 4 et 10 nm par exemple.

La couche active est à la base du mécanisme d'écriture mais participe également à la réflexion de l'empilement. Son épaisseur est comprise entre 10 et 100 nm et doit être ajustée pour permettre de conserver une puissance d'écriture raisonnable avec une réflexion suffisante. Les conditions de dépôt de cette couche sont ajustées pour travailler avec une épaisseur optimale à réflexion constante. En effet, les trous, bulles, cavités etc. formés doivent être suffisamment grands pour que le contraste soit bon mais pas trop pour limiter le bruit de lecture. Or, la largeur des trous, bulles, cavités, etc... semble proportionnelle dans certains cas à l'épaisseur de la couche. Le matériau de cette couche peut être par exemple : Te, Sb₂Te₃, In, Bi, Bi₂Te₃, SeTe, Se, As₃Se₃, As₂Te₃...

Des résultats de mesure sont présentés sur la figure 5. Sur cette figure sont représentées les variations du rapport signal sur bruit (S/B) porté en ordonnées et exprimé en dB, en fonction de la puissance optique de lecture P portée en abscisses et exprimée en mW. Les courbes correspondent à une succession de zones écrites de largeur 3T et de zones non écrites de même largeur, pour une vitesse linéaire de rotation du disque égale à quatre fois une vitesse de référence égale à 1,2 m/s soit, donc, 4,8 m/s. La couche active présentait une épaisseur de 25 nm. La couche semi-réfléchissante était une couche d'aluminium d'épaisseur variable, respectivement de 6 nm, 7 nm, 8 nm et 9 nm pour les courbes 51, 52, 53, 54. Le coefficient de réflexion de l'empilement dans les zones non écrites était respectivement de 46, 48, 50 et 51 % (alors que, sans couche réfléchissante, elle ne serait que de 40 %).

L'empilement bicouche de l'invention est suffisant pour écrire et lire des informations. Cependant, on peut, en option, ajouter à cet empilement d'autres couches pour protéger le disque des modifications physico-chimiques des matériaux (oxydation par exemple), pour éviter de l'endommager par des rayures ou des coups et pour lui éviter des salissures et traces diverses dont la présence peut gêner la lecture ou l'écriture et dont le nettoyage risque d'endommager le disque. On peut ainsi ajouter une ou deux couches, voire plus, sachant que plus le nombre de couches ajoutées est élevé moins la solution devient intéressante économiquement. Généralement, la dernière couche déposée assure la protection mécanique. Il s'agit souvent d'un vernis déposé à la tournette, solidifié sous rayonnement ultraviolet, ayant une épaisseur de quelques microns. On peut aussi utiliser la technique du disque scellé.

La couche diélectrique intermédiaire 44 peut être ajoutée entre la couche active 30 et la couche de protection 46 comme illustré sur la figure 5, pour diverses raisons notamment pour favoriser mécaniquement et thermiquement la déformation de la couche active et renforcer sa résistance. Cette couche intermédiaire peut également isoler chimiquement la couche active de la couche de protection.

Les couches active et réfléchissante sont déposées de préférence par pulvérisation. Les conditions de dépôt des deux couches sont choisies pour obtenir une réflexion suffisante tout en conservant un seuil de puissance d'écriture compatible avec la plupart des appareils de gravure disponibles dans le commerce. Les couches intermédiaire et de protection peuvent être réalisées par pulvérisation ou par dépôt à la tournette selon la nature des matériaux et l'épaisseur des couches.

Quelques exemples de modes de réalisation vont maintenant être décrits. Il va de soi qu'ils ne limitent en rien la portée de l'invention.

### Exemple 1

Le substrat est en polycarbonate. La couche réfléchissante est en aluminium d'épaisseur comprise entre 6 et 9 nm. Elle est déposée par pulvérisation avec un courant de cible de 500 mA et une pression d'argon de 3.10⁻³ mbar. La couche active est constituée de Sb₂Te₃, d'épaisseur 25 nm (calculée à partir du temps de dépôt). Elle est déposée par pulvérisation avec une pression d'argon de 10⁻³ mbar et un courant de cible de 100 mA. Les réflexions mesurées en faisceau focalisé à l'aide d'un testeur de CD-R du commerce donnent :

| Numéro de l'échantillon | 1 | 2 | 3 | 4 | 5 |
|---|---|---|---|---|---|
| Epaisseur d'aluminium (nm) | 0 | 6 | 7 | 8 | 9 |
| Réflexion (unité arbitraire) | 1 | 1,15 | 1,2 | 1,25 | 1,28 |

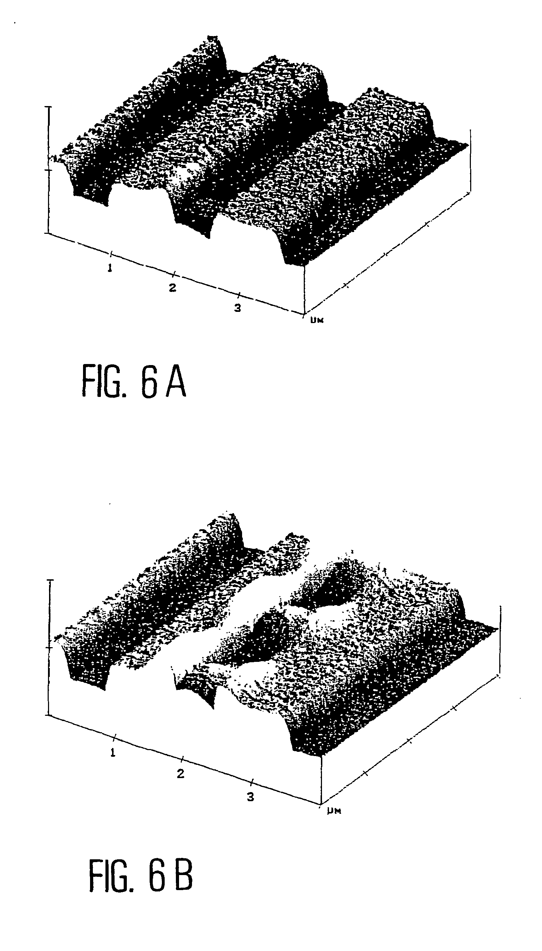

Les variations du rapport signal sur bruit en fonction de la puissance d'écriture obtenue à la vitesse 4,8m/s pour les échantillons comportant une couche d'aluminium sont représentées sur la figure 6. Pour une vitesse de 1,2 m/s le rapport signal sur bruit est supérieur à 45 dB pour une puissance supérieure à 5,5 mW pour les échantillons 2 et 3, supérieure à 7 mW pour l'échantillon 4. Le rapport signal sur bruit est supérieur à 43 dB à partir de 8 mW pour l'échantillon 5. A la vitesse double (2,4m/s) le rapport signal sur bruit est supérieur à 47 dB à partir de 7,5 mW pour les échantillons 2 et 3, à partir de 10 mW pour l'échantillon 4.

### Exemple 2

Le substrat est en polycarbonate. La couche réfléchissante est en aluminium d'épaisseur comprise entre 6 et 9 nm. Elle est déposée par pulvérisation avec un courant de cible de 500 mA et une pression d'argon de 3.10⁻³ mbar. La couche active constituée de Sb₂Te₃, d'épaisseur 30 nm (calculée à partir du temps de dépôt). Elle est déposée par pulvérisation avec une pression d'argon de 10⁻³ mbar et un courant de cible de 250 mA. Les réflexions mesurées en faisceau focalisé à l'aide d'un testeur de CD-R du commerce donnent :

| Numéro de l'échantillon | 1 | 2 | 3 | 4 | 5 |
|---|---|---|---|---|---|
| Epaisseur d'aluminium (nm) | 0 | 6 | 7 | 8 | 9 |
| Réflexion (unité arbitraire) | 1 | 1, 12 | 1,19 | 1,23 | 1,30 |

L'échantillon 2 a un rapport signal sur bruit supérieur à 42 dB à partir de 4 mW en vitesse 1,2m/s, 46 dB à partir de 6 mW en vitesse 2,4m/s et 48 dB à partir de 10 mW en vitesse 4,8m/s. L'échantillon 3 a un rapport sur bruit supérieur à 45 dB à partir de 6,5 mW en vitesse 1,2m/s, 8,5 mW en vitesse double et 12 mW en vitesse quadruple. Tous ces tests ont été effectués avec un signal composé d'alternances de zones de même longueur.

### Exemple 3

Le substrat est en polycarbonate. La couche est en aluminium de 7 nm d'épaisseur, la couche active a 40 nm d'épaisseur et est constituée de Sb₂Te₃. Une couche de protection de 40 nm en silice est prévue. La réflexion du disque en zone non écrite est de 60 %. Cet empilement a été irradié par un faisceau lumineux de longueur d'onde est comprise entre 7700 Å et 7900 Å les résultats se l'irradiation ont été observés par AFM (Atomic Force Microscope). La surface du disque (côté couche de silice), pour une puissance faible et une puissance forte est représentée sur les figures 6A et 6B.

### Exemple 4

Le substrat est en polycarbonate. La couche active de 20 nm est composée de Sb₂Te₃. Elle est réalisée par pulvérisation. La couche semi-transparente est en alliage aluminium-chrome de 7 nm d'épaisseur. Un vernis de protection a été déposé à la tournette et solidifié avec une lampe UV. La figure 7 montre les points inscrits sur le disque.

### Exemple 5

Le substrat est en polycarbonate. La couche active de 28 nm est en Sb₂Te₃. Elle est réalisée par pulvérisation. La couche semi-transparente est en aluminium de 6 nm d'épaisseur. Le rapport signal sur bruit a été mesuré avant application d'une couche de protection. les puissances de seuil sont compatibles avec la norme CD-R : 4 mW en vitesse 2,4 m/s, 5 mW en 4,8 m/s, 8 mW en 9,6 m/s.

Avec une couche d'élastomère, les puissances de seuil restent compatibles avec la norme CD-R : 4 mW en vitesse 2,4 m/s, 5 mW en 4,8 m/s et 9 mW en 9,6 m/s.

A la vitesse 145,4 m/s la puissance de seuil est de 13 mW pour un rapport signal sur bruit de 47 dB, avec la couche d'élastomère.

S'agissant de la longueur d'onde de la lumière servant à écrire et lire les données, on peut donner les indications suivantes. Pour la famille CD (CD-R) c'est autour de 8000 Å (proche infrarouge) qu'on travaillera, les fourchettes étant précisées dans les normes. Elles sont différentes pour la lecture et l'écriture. Pour le DVD (DVD-R par exemple) on se placera dans le rouge autour de 6300 ou 6500 Å. D'autres longueurs d'onde, dans le vert ou dans le bleu peuvent également être utilisées.

### REFERENCES CITEES :

1. "Principles of optical disc systems", G. Bouwhuis et al., ed. Adam Hilger Ltd, chapitre 6 "Materials for on-line optical recording" p. 210-227.
2. "Ablative hole formation process in thin tellurium-alloy films", M. Chen et al. appl.Phys.Lett. 41(9) 894-896 (1982).
3. "Thin films for optical data storage", W.-Y. Lee, J.Vac.Sci.Technol. A3 (3) 640-646 (1985).
4. "Laser recording in tellurium suboxide thin films", Y-S Tyan et al. J.Appl.Phys. 59(3) p. 716 (1986)
5. "Textured germanium optical storage medium", H.G.Craighead, Appl. Phys. Lett. 40(8) p. 662 (1982)
6. EP 0605891 et EP 0747895

## Revendications

1. Support d'enregistrement pour l'écriture d'informations, **caractérisé en ce qu'**il comprend un empilement bicouche constitué par une couche semi-réfléchissante (32) et une couche active inorganique (30), la couche active inorganique (30) étant apte à subir des déformations sous l'effet d'un rayonnement optique d'écriture (34) dirigé à travers la couche semi-réfléchissante (32), ces déformations abaissant le coefficient de réflexion de l'empilement. (Fig. 4A)

2. Support d'enregistrement pour la lecture d'informations, **caractérisé en ce qu'**il comprend un empilement bicouche constitué par une couche semi-réfléchissante (32) et une couche active inorganique (30), la couche active inorganique (30) présentant des déformations dans certaines zones (Ze), le coefficient de réflexion de l'empilement étant plus faible dans ces zones (Ze) qu'en dehors (Zne). (Fig.4B)

3. Support d'enregistrement selon l'une quelconque des revendications 1 et 2, dans lequel l'empilement bicouche est déposé sur un substrat transparent (40), la couche semi-réfléchissante (32) étant disposée entre le substrat (40) et la couche active inorganique (30).

4. Support d'enregistrement selon l'une quelconque des revendications 1 et 2, dans lequel l'empilement bicouche est déposé sur un substrat, la couche active inorganique (30) étant disposée entre le substrat et la couche semi-réfléchissante.

5. Support d'enregistrement selon l'une quelconque des revendications 1 et 2 dans lequel la couche semi-réfléchissante (32) est en métal.

6. Support d'enregistrement selon la revendication 5, dans lequel le métal de la couche semi-réfléchissante (32) est pris dans le groupe comprenant Al, Ag, Cu, Au, Zn, Ti et leurs alliages.

7. Support d'enregistrement selon l'une quelconque des revendications 5, dans lequel la couche semi-réfléchissante comprend deux couches métalliques.

8. Support d'enregistrement selon l'une quelconque des revendications 1 et 2 , dans lequel la couche active inorganique (30) est en matériau pris dans le groupe comprenant Te, Sb ou Se, et leurs alliages.

9. Support d'enregistrement selon l'une quelconque des revendications 1 et 2 , dans lequel la couche active inorganique (30) est en alliage SbTe avec un élément pris dans le groupe comprenant Al, Ag, Cu, Si, As.

10. Support d'enregistrement selon l'une quelconque des revendications 1 et 2 , dans lequel la couche active inorganique (30) est en alliage de SbSe avec un élément pris dans le groupe comprenant Al, Ag, Cu, Si, As.

11. Support d'enregistrement selon l'une quelconque des revendications 1 et 2 , dans lequel la couche active inorganique (30) est en alliage SeTe avec un élément pris dans le groupe comprenant Al, Ag, Cu, Si, As.

12. Support d'enregistrement selon l'une quelconque des revendications 8 à 10, dans lequel le matériau inorganique de la couche active (30) comporte une proportion d'azote.

13. Support d'enregistrement selon l'une quelconque des revendication 1 et 2, dans lequel une couche de protection (46) est déposée sur l'empilement.

14. Support d'enregistrement selon la revendication 13 comportant en outre une couche intermédiaire diélectrique (44) entre l'empilement et la couche de protection (46).

15. Support d'enregistrement selon l'une quelconque des revendications 13 et 14 dans lequel la couche de protection (46) est en silicone élastomère.

16. Support selon l'une quelconque des revendications 1 et 2 dans lequel la couche semi-réfléchissante (32) a une épaisseur comprise entre 4 et 10 nm.

17. Support d'enregistrement selon l'une quelconque des revendications 1 et 2 dans lequel la couche active inorganique (30) a une épaisseur comprise entre 10 et 100 nm.

18. Procédé d'écriture d'un support d'enregistrement selon la revendication 1, **caractérisé en ce qu'**on dirige un faisceau optique sur la couche active (30) à travers la couche semi-réfléchissante (32), la puissance du faisceau optique étant apte à provoquer des déformations de la couche active (30).

19. Procédé de lecture d'un support d'enregistrement selon la revendication 2, **caractérisé en ce qu'**on dirige un faisceau optique sur la couche active (30) à travers la couche semi-réfléchissante (32), la puissance du faisceau optique étant apte à donner naissance à un faisceau réfléchi dont l'intensité dépend des déformations de la couche active (30).

## Claims

1. Recording medium for writing information data, **characterised in that** it comprises a bilayer stack constituted by a semi-reflecting layer (32) and an inorganic active layer (30), the inorganic active layer (30) being suitable for undergoing deformations under the effect of an optical radiation for writing (34) directed through the semi-reflecting layer (32), these deformations lowering the reflection coefficient of the stack. (Fig. 4A).

2. Recording medium for reading data, **characterised in that** it comprises a bilayer stack constituted by a semi-reflecting layer (32) and an inorganic active layer (30), the inorganic active layer (30) having deformations in certain zones (Ze), the reflection coefficient of the stack being lower inside these zones (Ze) than outside them (Zne). (Fig. 4B).

3. Recording medium according to either one or the other of claims 1 and 2, wherein the bilayer stack is deposited on a transparent substrate (40), the semi-reflecting layer (32) being set between the substrate (40) and the inorganic active layer (30).

4. Recording medium according to either one or the other of claims 1 and 2, wherein the bilayer stack is deposited on a substrate, the inorganic active layer (30) being set between the substrate and the semi-reflecting layer.

5. Recording medium according to either one or the other of claims 1 and 2, wherein the semi-reflecting layer (32) is in metal.

6. Recording medium according to claim 5, wherein the metal of the semi-reflecting layer (32) is selected from the group comprising Al, Ag, Cu, Au, Zn, Ti and their alloys.

7. Recording medium according to claim 5, wherein the semi-reflecting layer comprises two metallic layers.

8. Recording medium according to either one or the other of claims 1 and 2, wherein the inorganic active layer (30) is in a material selected from the group comprising Te, Sb or Se, and their alloys.

9. Recording medium according to either one or the other of claims 1 and 2, wherein the inorganic active layer (30) is in an SbTe alloy with an element selected from the group comprising Al, Ag, Cu, Si, As.

10. Recording medium according to either one or the other of claims 1 and 2, wherein the inorganic active layer (30) is in an SbSe alloy with an element selected from the group comprising Al, Ag, Cu, Si, As.

11. Recording medium according to either one or the other of claims 1 and 2, wherein the inorganic active layer (30) is in an SeTe alloy with an element selected from the group comprising Al, Ag, Cu, Si, As.

12. Recording medium according to any one or claims 8 to 10, wherein the inorganic material of the active layer (30) comprises a proportion of nitrogen.

13. Recording medium according to either one or the other of claims 1 and 2, wherein a protective layer (46) is deposited on the stack.

14. Recording medium according to claim 13, furthermore comprising a dielectric intermediary layer (44) between the stack and the protective layer (46).

15. Recording medium according to either one or the other of claims 13 and 14, wherein the protective layer (46) is in elastomer-silicon.

16. Recording medium according to either one or the other of claims 1 and 2, wherein the semi-reflecting layer (32) has a thickness of from 4 to 10 nm.

17. Recording medium according to either one or the other of claims 1 and 2, wherein the inorganic active layer (30) has a thickness of from 10 to 100 nm.

18. Method of writing for a recording medium according to claim 1, **characterised in that** an optical beam is directed onto the active layer (30) through the semi-reflecting layer (32), the power of the optical beam being able to provoke deformations of the active layer (30).

19. Method of reading for a recording medium according to claim 2, **characterised in that** an optical beam is directed onto the active layer (30) through the semi-reflecting layer (32), the power of the optical beam being able to produce a reflected beam with intensity depending on the deformations of the active layer (30).

## Patentansprüche

1. Datenaufzeichnungsträger, **dadurch gekennzeichnet, dass** er einen Zweischichtenstapel umfasst, gebildet durch eine teilreflektierende Schicht (32) und eine anorganische aktive Schicht (30), wobei die anorganische aktive Schicht (30) fähig ist, sich unter der Wirkung einer die teilreflektierende Schicht durchquerenden optischen Schreibstrahlung (34) zu verformen und diese Verformungen dabei den Reflexionskoeffizienten des Stapels niedriger macht. (Fig. 3A)

2. Datenaufzeichnungsträger, **dadurch gekennzeichnet, dass** er einen Zweischichtenstapel umfasst, gebildet durch eine teilreflektierende Schicht (32) und eine anorganische aktive Schicht (30), wobei die anorganische aktive Schicht (30) in bestimmten Zonen (Ze) Verformungen aufweist und der Reflexionskoeffizienten des Stapels in diesen Zonen (Ze) niedriger ist als außerhalb (Zne) (Fig. 3B)

3. Datenaufzeichnungsträger nach einem der Ansprüche 1 und 2, bei dem der Zweischichtenstapel auf einem transparenten Substrat (40) abgeschieden ist und die teilreflektierende Schicht (32) sich zwischen dem Substrat (40) und der anorganischen aktiven Schicht (30) befindet.

4. Datenaufzeichnungsträger nach einem der Ansprüche 1 und 2, bei dem der Zweischichtenstapel auf einem Substrat abgeschieden ist und die anorganische aktive Schicht (30) sich zwischen dem Substrat und der teilreflektierenden Schicht befindet.

5. Datenaufzeichnungsträger nach einem der Ansprüche 1 und 2, bei dem die teilreflektierende Schicht (32) aus Metall ist.

6. Datenaufzeichnungsträger nach Anspruch 5, bei dem das Metall der teilreflektierenden Schicht (32) ausgewählt wird aus der Gruppe, die Al, Ag, Au, Zn, Ti und ihre Legierungen umfasst.

7. Datenaufzeichnungsträger nach Anspruch 5, bei dem die teilreflektierende Schicht zwei metallische Schichten umfasst.

8. Datenaufzeichnungsträger nach einem der Ansprüche 1 und 2, bei dem die anorganische aktive Schicht (30) aus einem Material, ausgewählt aus der Te, Sb oder Se und ihre Legierungen umfassenden Gruppe ist.

9. Datenaufzeichnungsträger nach einem der Ansprüche 1 und 2, bei dem die anorganische aktive Schicht (30) aus einer SbTe-Legierung mit einem aus der Al, Ag, Cu, Si, As umfassenden Gruppe ausgewählten Element ist.

10. Datenaufzeichnungsträger nach einem der Ansprüche 1 und 2, bei dem die anorganische aktive Schicht (30) aus einer SbSe-Legierung mit einem aus der Al, Ag, Cu, Si, As umfassenden Gruppe ausgewählten Element ist.

11. Datenaufzeichnungsträger nach einem der Ansprüche 1 und 2, bei dem die anorganische aktive Schicht (30) aus einer SeTe-Legierung mit einem aus der Al, Ag, Cu, Si, As umfassenden Gruppe ausgewählten Element ist.

12. Datenaufzeichnungsträger nach einem der Ansprüche 8 bis 10, bei dem das anorganische aktive Material der aktiven Schicht (30) einen Stickstoffanteil umfasst.

13. Datenaufzeichnungsträger nach einem der Ansprüche 1 und 2, bei dem eine Schutzschicht (46) auf dem Stapel abgeschieden ist.

14. Datenaufzeichnungsträger nach Anspruch 13 mit außerdem einer dielektrischen Intermediärschicht (44) zwischen dem Stapel und der Schutzschicht (46).

15. Datenaufzeichnungsträger nach einem der Ansprüche 13 und 14, bei dem die Schutzschicht (46) aus elastomerem Silicon ist.

16. Datenaufzeichnungsträger nach einem der Ansprüche 1 und 2, bei dem die teilreflektierende Schicht (32) eine zwischen 4 und 10 nm enthaltene Dicke hat.

17. Datenaufzeichnungsträger nach einem der Ansprüche 1 und 2, bei dem die anorganische aktive Schicht (30) eine zwischen 10 und 100 nm enthaltene Dicke hat.

18. Verfahren zum Beschreiben eines Datenaufzeichnungsträgers nach Anspruch 1, **dadurch gekennzeichnet, dass** man eine optische Strahlung auf die aktive Schicht (30) richtet, durch die teilreflektierende Schicht (32) hindurch, wobei die Leistung der optischen Strahlung fähig ist, Verformungen der aktiven Schicht (30) zu bewirken.

19. Verfahren zum Beschreiben eines Datenaufzeichnungsträgers nach Anspruch 2, **dadurch gekennzeichnet, dass** man eine optische Strahlung auf die aktive Schicht (30) richtet, durch die teilreflektierende Schicht (32) hindurch, wobei die Leistung der optischen Strahlung fähig ist, eine Reflexionsstrahlung zu erzeugen, deren Intensität von den Verformungen der aktiven Schicht (30) abhängt.
